# EUROPEAN PATENT SPECIFICATION

(11) **EP 2 113 394 B1**
(45) Date of publication and mention of the grant of the patent: **09.11.2011**
(21) Application number: 08710385.9
(22) Date of filing: 15.02.2008
(51) Int. Cl.: B60B 27/00, B60B 35/02, B60B 35/18, F16C 19/18, F16C 33/62, F16C 33/64, F16C 33/78, F16C 35/063

(54) **BEARING FOR WHEEL AND METHOD FOR MANUFACTURING THE SAME**
LAGER FÜR RAD UND HERSTELLUNGSVERFAHREN DAFÜR
COUSSINET DE ROUE ET SON PROCÉDÉ DE FABRICATION

(30) Priority: 23.02.2007 JP 2007043595
(43) Date of publication of application: 04.11.2009
(73) Proprietor: NTN Corporation, Osaka-shi, Osaka 550-0003 (JP)
(72) Inventor: MAEDA, Kikuo c/o NTN CORPORATION, Kuwana-shi Mie 511-0867 (JP); OHTSUKI, Hisashi c/o NTN CORPORATION, Iwata-shi Shizuoka 438-0037 (JP)
(74) Representative: Baumgärtel, Gunnar
(86) International application number: PCT/JP2008/000231
(87) International publication number: WO 2008/102529

(56) References cited:
- EP-A- 1 486 353
- WO-A1-2007/010772
- JP-A- 2001 303 174
- JP-A- 2004 156 764
- JP-A- 2005 188 599
- JP-A- 2006 226 373
- JP-A- 2007 022 464
- JP-A- 2007 024 273

## Description

### BACKGROUND OF THE INVENTION

### (Field of the Invention)

The present invention relates to a method of manufacturing a wheel support bearing assembly according to the preamble of claim 1 and as it is disclosed in JP 2007022 464A.

### (Description of the Prior Art)

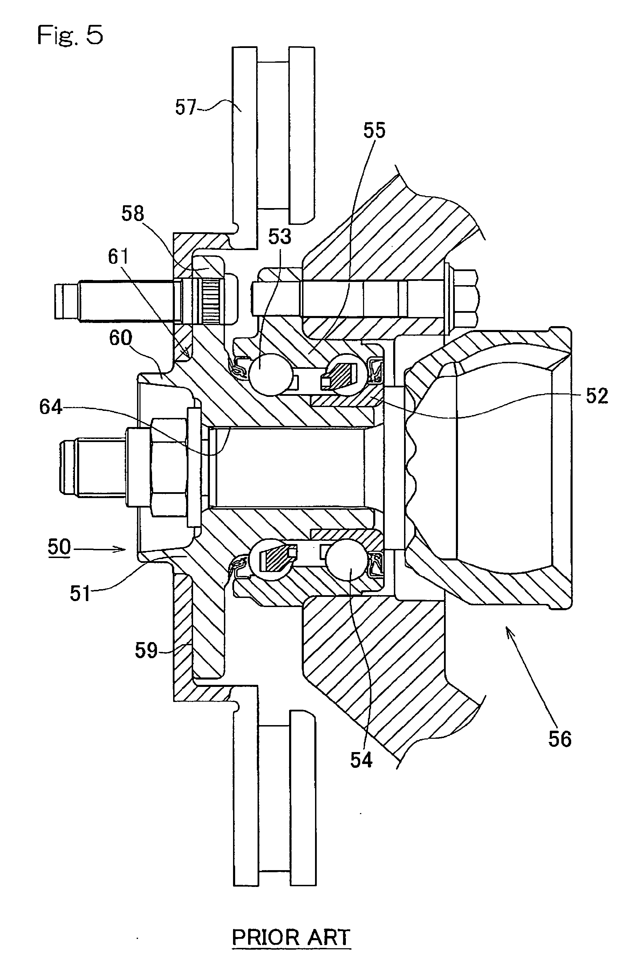

A wheel support bearing assembly for the motor vehicle is currently available in two types, one for supporting a vehicle driven wheel and the other for supporting a vehicle drive wheel, and there is a variety of designs that can be selected depending on the particular purpose of use. By way of example, a conventional wheel support bearing assembly designed to support the vehicle drive wheel such as shown in Fig. 5 includes, as major components, an inner member 50 made up of an hub unit 51 and an inner ring 52, double row rolling elements 53 and 54, an outer member 55 and a constant velocity universal joint 56 for transmitting an engine power to the hub unit 51. In this type of the bearing assembly for the support of the vehicle drive wheel, a medium carbon steel for application in mechanical structures, such as S53C, is largely employed as a material for the hub unit 51, by which the vehicle wheel (not shown) and a brake rotor 57 are supported, due to the easiness of forging, cutting performance, thermal refinement characteristic or economical efficiency. Reduction in size and weight of the wheel support bearing assembly of the kind discussed above, as well as that of the hub unit 51, contributes considerably to improvement in mileage and traveling stability of the motor vehicle and, therefore, attempts have been made in progress to reduce the wall thickness of a wheel mounting flange 58 integral with the hub unit 51 and/or to employ such wheel mounting flange 58 with a plurality of ribs. However, the mechanical strength of the hub unit 51 itself is coming close to the fatigue limit of the medium carbon steel that is used as a material for the hub unit 51, and, accordingly, it has now come to be difficult to achieve a further reduction in size and weight and a further increase of the durability.

Particularly in the hub unit 51, where the wall thickness of the wheel mounting flange 58 is to be reduced for the purpose of reducing the weight thereof, rotational bending stresses tend to concentrate on an outboard root portion of the wheel mounting flange 58, that is, a corner area 61 ranging from a brake rotor mounting surface 59 to a cylindrical pilot portion 60 and, accordingly, countermeasure against the stress concentration is required to be taken. In view of this, it may be contemplated to increase the dimension of the corner area 61, that is, the radius of curvature of that corner rear 61 to thereby relieve the generation of the stresses, but this in turn leads to a problem associated with interference with the brake rotor 57 that is fitted to the wheel mounting flange 58.

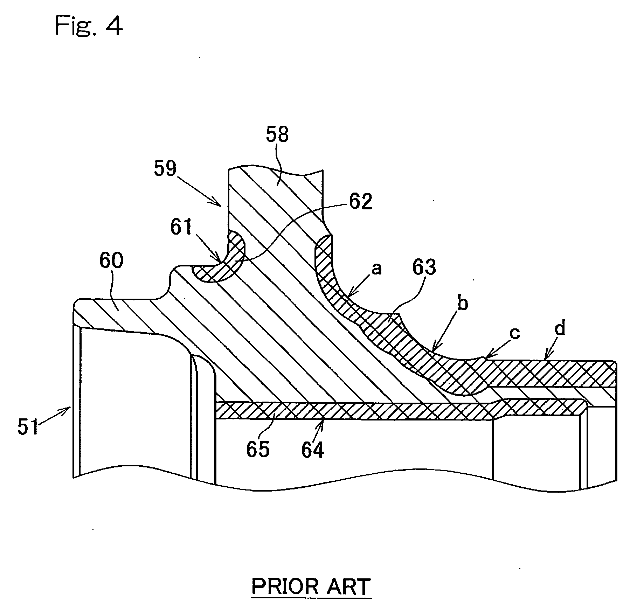

In view of the foregoing background, the applicant or assignee of the present invention has suggested a wheel support bearing assembly of a type, in which the attempts were made to, without altering the shape and the dimensions of the wheel mounting flange 58, reduce the weight and increase the strength of the hub unit 51. This wheel support bearing assembly is illustrated in Fig. 4 and includes a surface hardened layer 62 formed by means of an induction hardening technique in the corner area 61 of the wheel mounting flange 58 in the hub unit 51. In this way, the corner area 61 of the wheel mounting flange 58, which has hitherto been considered the most fragile area susceptible to the rotational bending fatigue, can be reinforced to a high strength, resulting in increase of the durability of the hub unit 51.

Other than that area, that is, a seal land area a, where a sealing lip (not shown) of the seal mounted on an outboard end portion of the outer member 55 (Fig. 5), and various parts b to d extending from rolling surfaces to the radially inwardly stepped area are formed with a surface hardened layer 63 by means of an induction hardening technique or the like. Also, the serrations 64 formed on the inner peripheral surface of the hub unit 51 are formed with a surface hardened layer 65. Thanks to those surface hardened layers 63 and 65, the rolling fatigue lifetime, the frictional wear resistance and the rotational bending fatigue strength required in those parts a to d can be increased. (See, for example, the Patent Document 1 listed below.)
[Patent Document 1] Japanese Laid-open Patent Publication No. 2002-087008 (Pages 4 and 5 and Fig. 2 thereof.)
[Patent Document 2] Japanese Laid-open Patent Publication No. 2005-003061

It has been found that although in those conventional wheel support bearing assemblies, formation of the surface hardened layer 62 in the corner area 61 of the wheel mounting flange 58 in the hub unit 51 is effective to increase the strength of the hub unit 51 and, at the same time, to reduce the weight thereof, without altering shape and dimension of the wheel mounting flange 58. However, an unexpected problem tends to arise that the wheel mounting flange 58 comes to be susceptible to deformation under the influence of heat treatment during the induction hardening process, resulting in surface runout of a brake rotor mounting surface 58. Reduction in wall thickness of the wheel mounting flange 58 also constitutes a cause of that tendency. The surface runout referred to above in turn results in brake judder under the influence of wobbling of the brake rotor 57 (Fig. 5), thus leading to reduction in automobile drivability and driving feeling. Therefore, it may be contemplated to eliminate the surface runout by additionally performing a machining process on the brake rotor mounting surface 59 after the heat treatment of the hub unit 51 to compensate for the deformation. However, the presence of a difference in hardness between the corner area 61, which has been hardened, and the brake rotor mounting surface 59, which has not been hardened, involves such a problem that a slight step tends to be formed at the boundary between the brake rotor mounting surface 59 and the surface hardened layer 62 of the corner area 61.

In order to alleviate the foregoing problems, the applicant or assignee of the present invention has suggested such a method (the Patent Document 2 listed above) that in a wheel support bearing assembly of the type, in which the wheel mounting flange is formed integrally with one of the outer member and the inner member, at least one of the outer and inner members, which has the wheel mounting flange formed therein, is thermally refined. However, this technique requires method steps to heat-treat the outer member or the inner member after having been forged for thermal refinement, to a temperature equal to or lower than the A1 transformation temperature, then to quench it and finally to temper it to a temperature equal to or higher than 400°C.

The present invention has been devised to substantially eliminate the various problems and inconveniences inherent in the conventional art and is intended to provide a method of manufacturing a wheel support bearing assembly, in which the strength and the durability of the hub unit under rotational bending conditions are increased and, at the same time, the weight thereof is reduced without altering the shape and dimension of the wheel mounting flange or without deteriorating the surface runout, to therefore obtaining the hardness and the strength both comparable with those of the conventionally thermal refined products.

### SUMMARY OF THE INVENTION

A method for manufacturing a . wheel support bearing assembly of the present invention discloses the features of claim 1.

According to the construction described above, at least one of the outer and inner members, which is formed with the wheel mounting flange referred to above, is forged and rendered to have a hardened troostite structure, a hardened sorbite structure or a mixed structure of hardened troostite and sorbite structures, so that respective rolling surfaces in the outer and inner members can have a predetermined surface hardness comparable with that obtained by means of a thermal refinement which includes quenching and tempering, by controlling the cooling rate in the forging or by causing it to undergo an isothermal transformation, such that the rolling surfaces on the outer and inner members are hardened to predetermined hardness. For this reason, a desired bearing lifetime can be secured, and also the strength and the durability can be increased against the rotational bending fatigue without altering the shape and the dimension of the wheel mounting flange while keeping the existing processing method and existing equipments and facilities.

Also, the hardened sorbite structure is rather preferable. Selection of the hardened sorbite structure is effective to increase the ductility and the toughness and, therefore, the strength and the durability against the rotational bending fatigue can be increased further.

In the present invention, the inner member may include the hub unit formed with the wheel mounting flange and an inner ring press-fitted onto the hub unit. The inner rolling surface opposed to one of the outer rolling surfaces formed in the outer member is formed directly in an outer peripheral surface of the hub unit. The inner rolling surface opposed to the other of the outer rolling surfaces is formed in an outer peripheral surface of the inner ring. In such case, the wheel support bearing assembly can have a reduced size and a reduced weight, and the strength and the durability of the hub unit can also be further increased as compared with those of the conventional counterpart.

In the present invention, an outboard root portion of the wheel mounting flange preferably has a surface hardness set to a value within the range of 23 HRC to 35 HRC. In such case, the processability such as cutting can be increased, and the deformation during the heat treatment can also be suppressed, thereby avoiding deterioration of the surface runout precision of the brake rotor mounting surface of the wheel mounting flange resulting from the deformation during the heat treatment. Also, the possibility can be avoided that the surface hardness of the bolt holes, into which the hub bolts are press fitted, approach the surface hardness of the hub bolts so that some or all of the serrations of the hub bolts will be crushed enough to lower the fixing strength.

In the present invention, an inboard end of the hub unit may be plastically deformed in a direction radially outwardly thereof to form a crimped portion and the inner ring is axially fixed by this crimped portion relative to the hub unit. In this case, since there is no need to control the amount of preload by firmly fastening with nuts or the like as has hitherto been practiced, incorporation into the automotive vehicle can be simplified and the amount of preload can be maintained for an extended length of time.

In the present invention, the crimped portion is preferably tempered to have a surface hardness within the range of 18 HRC to 25 HRC. In this case, as compared with a forged but not heat-treated portion such as in the conventional case, variation in hardness of the crimped portion can be suppressed and, without lowering the processability, the possibility of occurrence of fine cracks in the surface due to the plastic processing can be eliminated, resulting in further increase of the reliability in quality.

In the present invention, outboard and inboard sealing elements are preferably disposed at opposed ends of the outer member, respectively, and a seal land area, with which a sealing lip of the outboard sealing element is slidingly engaged, is formed in an inboard root portion of the wheel mounting flange, the seal land area having a surface hardness set to a value within the range of 54 HRC to 64 HRC. In this case, the frictional wear resistance can be increased, and also the mechanical strength can be sufficiently increased against the rotational bending load on the wheel mounting flange and the strength and the durability of the hub unit can also be increased.

In the present invention, the inner member or the outer member subject to the cooling rate controlling in forging or to the isothermal transformation is preferably made of a medium carbon steel containing carbon in a quantity within the range of 0.40 wt% to 0.80 wt%. In this case, this is particularly advantageous in terms of the easiness of forging, cutting performance, thermal refinement characteristic or economical efficiency and, also, this is particularly suitable in an induction hardening or the like.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a sectional view of a wheel support bearing assembly according to a first preferred embodiment of the present invention;
Fig. 2 is a sectional view of the wheel support bearing assembly according to a second preferred embodiment of the present invention;
Fig. 3 is a sectional view of the wheel support bearing assembly according to a third preferred embodiment of the present invention;
Fig. 4 is a sectional view showing a conventional wheel support bearing assembly; and
Fig. 5 is a sectional view showing another conventional wheel support bearing assembly.

### DESCRIPTION OF THE PREFERRED EMBODIMENTS

Preferred embodiments of the present invention will now be described in detail with reference to the accompanying drawings. It is to be noted that hereinafter in this specification, terms "outboard" and "inboard" represent one side (a left side as viewed in the drawings) of the vehicle body away from the longitudinal center of the vehicle body and the other side (a right side as viewed in the drawings) of the vehicle body close to the longitudinal center of the vehicle body, respectively, when assembled in the vehicle body. The following description includes a description of the method of manufacturing the wheel support bearing assembly.

The wheel support bearing assembly referred to above is of a type used for the support of a vehicle drive wheel and is so designed and includes a hub unit 1, a double row rolling bearing unit 2 unitized together with the hub unit 1 into a unitary structure and a constant velocity universal joint 4 having an outer coupling member 40 mounted on an inner periphery of the hub unit 1 by means of serrations for torque transmission.

The wheel support bearing assembly includes an outer member 5 having an inner periphery formed with double row outer rolling surfaces 5a and 5a and also having an outer periphery formed integrally with a vehicle body fitting flange 5b adapted to be secured to a vehicle body (not shown). The bearing assembly also includes the hub unit 1 having an outer periphery formed with one of inner rolling surfaces opposed to the respective outer rolling surfaces 5a and 5a, that is, an inner rolling surface la, an inner ring 6 press fitted onto a radially inwardly stepped area 1b of the hub unit 1 and having its outer periphery formed with the other of the inner rolling surfaces, that is, an inner rolling surface 6a, and a plurality of rows of rolling elements 7 and 7 accommodated between the outer rolling surfaces 5a and 5a and the inner rolling surfaces 1a and 6a. The double row rolling elements 7 and 7 are rollingly retained by respective retainers (not shown). The hub unit 1 and the inner ring 6 cooperate with each other to define an inner member 3. Also, sealing elements 8 and 8 are mounted in opposed ends of the double row rolling bearing unit 2 to avoid leakage of a lubricant grease, filled inside the interior of the bearing unit, and also to avoid ingress of rain water and/or dust from the outside. A seal land area 22, with which a sealing lip of the outboard sealing element 8 is slidingly engaged, is formed in an inboard root portion of the wheel mounting flange 10.

The hub unit 1 has an insertion hole 42 defined in a center portion thereof and also has an inner periphery formed with torque transmitting serrations (or spline grooves or projections) 9 and is formed integrally with a wheel mounting flange 10 on an outer periphery of an outboard end thereof for supporting a vehicle wheel WH together with a brake rotor 24 for rotation together therewith. Also, a plurality of hub bolts 11 for fixedly retaining the vehicle wheel are secured to the wheel mounting flange 10 in a fashion spaced equidistantly from each other in a direction circumferentially of the flange 10.

In this wheel support bearing assembly, after the inner ring 6, which is a separate member, has been press fitted onto the radially inwardly stepped area 1b of the hub unit 1, a free end of the radially inwardly stepped area 1b is plastically deformed in a direction radially outwardly thereof to form a crimped portion 12, by which the inner ring 6 is axially anchored to the hub unit 1, thereby unitizing the double row rolling bearing unit 2 and the hub unit 1 together in a unitary structure. By this unitization, it is possible to provide a third generation type wheel support bearing assembly of a so-called self-retained structure, with which a preload control of the double row rolling bearing unit 2 can be achieved without fastening members such as, for example, an anchoring nut. Although in the foregoing description reference has been made to the dual row angular contact ball bearing employing balls for the rolling elements 7 and 7, the present invention is not necessarily limited thereto and can be equally applied to a double row tapered roller bearing utilizing tapered rollers for the rolling elements.

The constant velocity universal joint 4 includes, in addition to the outer coupling member 40 referred to hereinabove, an inner coupling member (not shown), torque transmitting balls accommodated between the inner coupling member and the outer coupling member 40, and a ball cage for retaining the torque transmitting balls in a fashion spaced equidistantly from each other in a circumferential direction thereof. The outer coupling member 40 includes a cup-shaped mouth portion 13, a shoulder portion 14 defining a bottom of the mouth portion 13 and a stem portion 15 extending axially from the shoulder portion 14. The stem portion 15 has an outer peripheral surface formed with complemental serrations (or splines) 16 and also has a free end portion formed with a male thread 17.

By inserting the stem portion 15 of the outer coupling member 40 into the insertion hole 42 defined in the hub unit 1 with the serrations 9 in the hub unit 1 engaged with the complemental serrations 16 in the stem portion 15, the torque can be transmitted therebetween. Then, while an end face of the shoulder portion 14 is brought into contact with the crimped portion 12 of the hub unit 1, an anchoring nut 18 is firmly threaded onto the free end of the stem portion 15 to removably connect the constant velocity universal joint 4 with the double row rolling bearing unit 2.

In the wheel support bearing assembly of the construction described hereinabove, the hub unit 1 is, after a medium carbon steel such as, for example, S53C containing carbon in a quantity within the range of 0.40 wt% to 0.80 wt% as stipulated in the Japanese Industrial Standards (or JIS for short) has been hot forged, rendered to have a troostite structure, a sorbite structure or a mixed structure of troostite and sorbite by force-air-cooling or thermostatically maintaining the hub unit 1 within a predetermined temperature range, thereby controlling the cooling rate, so that the hub unit 1 can have a hardness within the range of HRC 23 and HRC 35, followed by turned to have a desired shape and dimension. An area of the root portion of the wheel mounting flange 10 on the outboard side, that is the corner area 21 ranging from an outboard end surface of the wheel mounting flange 10, that is, a brake rotor mounting surface 19 to a cylindrical pilot portion 20 defining a support face for the brake rotor 24 is formed to represent an arcuate surface or recess portion having a radius of curvature enough to avoid interference with the brake rotor 24.

In the embodiment now under discussion, the hub unit 1 has a hardness within the range of 23 HRC to 35 HRC as a result that the hub unit 1 has been cooled in a controlled fashion so as to have the troostite structure, the sorbite structure or the mixed structure of troostite and sorbite after having been forged. By this process, the structure is refined so as to be approximately equivalent to the conventional ferrite-pearlite structure, resulting in improvement of mechanical characteristics such as tensile strength, bending strength or impact value, which in turn result in increase of the ductility and the toughness. For this reason, the hub unit 1 can have a high strength comparable with the conventional counterparts that are thermally refined (quenched and tempered at elevated temperature).

Since increase of the surface hardness results in increase of the mechanical strength, in a practice of the present invention, thermal refinement may be performed. It is, however, to be noted that this process is not necessarily limited to the thermal refinement. In any event, as a result of the thermal refinement, the hub unit 1 has its surface hardness set to be within the range of a value equal to or lower than 35 HRC. The reason for such selection of the surface hardness is because if the surface hardness is set to be higher than 35 HRC, the processability such as, for example, machinability can be lowered, and also thermal deformation will take place considerably, and, therefore, the surface runout precision of the brake rotor mounting surface 19 of the wheel mounting flange 10 will be deteriorated and, also, service lives of a cutting tool will be reduced consequently upon increase of the surface hardness. Also, the surface hardness of bolt holes 11a for receiving the hub bolts 11 press-fitted thereto comes close to the surface hardness of the hub bolts 11 so that some or all of the serrations 11b of the hub bolts 11 will be crushed enough to lower the fixing strength.

In other words, by cooling the hub unit 1 in a controlled manner as hereinabove described, it is possible to set the surface hardness of the hub unit 1 to a value equal to or lower than 35 HRC and to improve the processability such as, for example, a cutting performance during the subsequent method step. Other than it, the following advantages can also be obtained: It is possible to suppress the thermal deformation, which would otherwise occur during the heat treatment, to thereby avoid deterioration of the surface runout precision of the brake rotor mounting surface 19 on the wheel mounting flange 10. Moreover, it is possible to avoid reduction in machinability, which would result from the increase of the surface hardness, accompanied by extension of the service life of the cutting tool, compared to the case having a surface hardness higher than 35 HRC. Yet, since the surface hardness of the bolt holes 11 a for receiving the respective press-fit hub bolts 11 and the surface hardness of the hub bolts 11 can be differentiated from each other such that crush of the serrations 11b of the hub bolts 11 can be prevented beforehand, thereby suppressing reduction in fixing strength of the hub bolts 11.

In addition, while the crimped portion 12 referred to hereinbefore is formed, if the surface hardness of the inboard end portion of the hub unit 1 exceeds the upper limit of 35 HRC, not only will the processability be lowered, but also there is a risk that due to plastic forming, fine cracks will occur in the surface, accompanied by reduction in reliability of the quality. Although in terms of the plastic forming the surface hardness should be rather low, sufficient mechanical strength is difficult to obtain if it is lower than the lower limit of 18 HRC. The reliability will increase provided that in the crimped portion 12 the surface hardness thereof is chosen to be within the range of 18 HRC to 35 HRC and preferably within the range of 18 HRC to 25 HRC. Yet as compared with a conventional case in which the crimped portion is not heat-treated after having been forged, variation in hardness of the crimped portion can be suppressed and the possibility of occurrence of fine cracks in the surface due to the plastic processing can be eliminated, resulting in further increase of reliability in terms of quality.

The surface hardness of the hub unit may be set to a value equal to or lower than 35 HRC without performing a thermal refinement on the hub unit by hot-forging the material for the hub unit, that is, a medium carbon steel and then by forced-air-cooling or thermostatically maintaining it within a predetermined temperature range, thereby controlling the cooling rate. Even in this case, advantages similar to those afforded by the foregoing embodiment of the present invention can be obtained.

As hereinabove described, by controlling the cooling rate for the forged hub unit 1 to provide a desired microstructure, that is, the troostite structure, the sorbite structure or a mixed structure of troostite and sorbite and also to set the surface hardness within the predetermined range as discussed above, without altering the shape and dimension of the wheel mounting flange 10, the strength of the corner area 21, which forms the most fragile portion susceptible to rotational bending fatigue, can be increased while keeping the existing processing method and existing equipments.

Also, when the turning is subsequently performed on the hub unit 1, the surface runout precision of the brake rotor mounting surface 19 of the wheel mounting flange 10 can be further improved as compared with that in the conventional counterpart. In addition, in the crimped portion 12, occurrence of cracking can be suppressed without the processability during the plastic forming being reduced, thus allowing the reliability in quality to be maintained.

Table 1 illustrates the 10⁷ times fatigue strength ratios by the conventional ferrite-pearlite structure in the S53C material, the two thermally refined structure (oil quenching after heating at 850°C, followed by tempering at 400°C and 600°C) and two structures produced according to the present invention, all of these structures having been derived from model rings, that is, test pieces. The structures produced according to the present invention refer to the test piece, which was cooled down to 400°C at a rate of 200°C per minute after having been forged, and to the test piece which was rapidly cooled after having been retained at 550°C for 5 minutes subsequent to the forging.

Test conditions employed are shown in Table 2. In Table 2, each of the test pieces was a model ring of 38 mm in outer diameter, 30 mm in inner diameter and 15 mm in width.

**Table 1**

| Conditions | Representative Microstructures | Ratios of Fatigue Strengths |
|---|---|---|
| As forged | Ferrite-pearlite | 0.6 |
| Thermally refined (400°C) | Tempered troostite | 1.1 |
| Thermally refined (600°C) | Tempered sorbite | 1.0 |
| Cooled down to 400°C at a rate of 200°C/min. subsequent to forging | Rapidly cooled sorbite | 0.9 |
| Rapidly cooled after having been retained for 5 minutes at 550°C subsequent to forging | Rapidly cooled sorbite | 1.0 |

**Table 2**

| Testing Machine | Servo-pulsar |
|---|---|
| Test pieces | φ 38 mm x φ 30 mm x t 15 mm |
| Preload | 10% of Max. Load |
| Loading Rate | 50 Hz |

According to Table 1, the thermally refined test piece having the thermally refined structure, which was, after having been heated at 850°C, oil quenched and tempered at 600°C has exhibited the fatigue strength ratio of 1.0, and the thermally refined test piece having the thermally refined structure, which was, after having been heated at 850°C, oil quenched and tempered at 400°C, has exhibited the fatigue strength ratio of 1.1. In contrast, the test pieces, processed according to the present invention, which was cooled down to 400°C at a rate of 200°C per minute subsequent to the forging, has shown the fatigue strength ratio of 0.9 and the test piece, processed according to the present invention, which was rapidly cooled after having been retained at 550°C for 5 minutes subsequent to the forging, has shown the fatigue strength ratio of 1.0. Those results of the tests make it clear that the present invention can provide the fatigue strengths comparable remarkably with those exhibited by the thermally refined products.

Also, the hub unit 1 is such that the inner rolling surface la on the outboard side, the seal land area 22 where the sealing element 8 undergoes a sliding contact, and the radially inwardly stepped area 1b are formed, respectively, with a hardened layer 23 (shown by cross hatchings in the drawing) of a surface hardness within the range of 54 HRC to 64 HRC by means of an induction hardening process. Accordingly, the seal land area 22 can have an increased frictional wear resistance and also a sufficient mechanical strength against the rotational bending load on the wheel mounting flange 10, with the durability of the hub unit 1 being increased consequently. The inner ring 6 that is press-fitted onto the radially inwardly stepped area 1b is made of a high-carbon chromium bearing steel such as, for example, SUJ2 stipulated according to the JIS and is hardened deep down to the core by means of a dip quenching technique to have a hardness within the range of 58 HRC to 64 HRC.

On the other hand, the outer member 5 is made of a medium carbon steel such as, for example, S53C containing carbon within the range of 0.40 wt% to 80 wt% as is the case with the hub unit 1 and the double row outer rolling surfaces 5a and 5a and the end inner diametric surface, in which the sealing elements 8 and 8 are engaged, are hardened by means of an induction hardening process to have a surface hardness within the range of 54 HRC to 64 HRC.

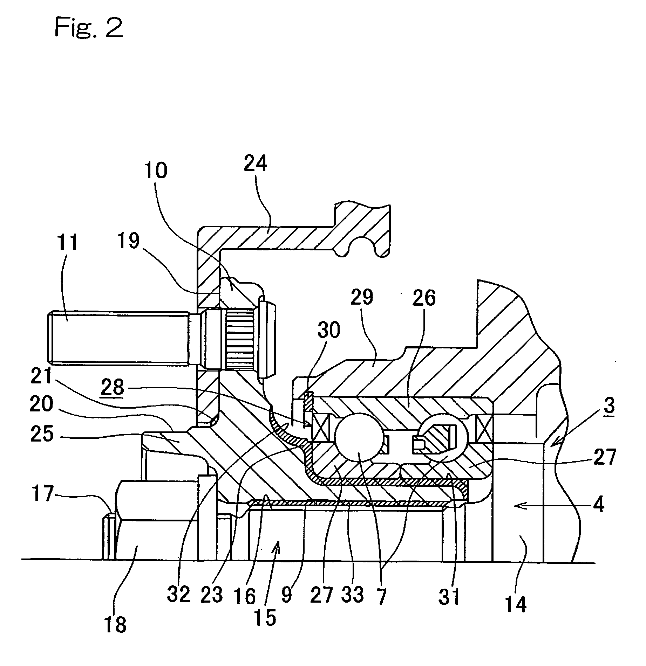

Fig. 2 illustrates a sectional view of the wheel support bearing assembly according to a second preferred embodiment of the present invention. This second embodiment is applied to the wheel support bearing assembly of the first generation type. In the description that follows, component parts similar to those shown and described in connection with the previously described embodiment including modifications thereof arc designated by like reference numerals and the details thereof will not be reiterated for the sake of brevity.

This wheel support bearing assembly according to the second embodiment includes a hub unit 25, to which a vehicle wheel (not shown) is fitted together with a brake rotor 24, and a wheel support bearing unit 28 for rotatably supporting the hub unit 25 and having an outer ring 26, a pair of inner rings 27 and 27 arranged in an axial direction, and double row rolling elements 7 and 7 rollingly accommodated between the inner and outer rings 27 and 26. This bearing unit 28 is fitted to a knuckle 29 of the automotive vehicle and is drivingly coupled with a constant velocity universal joint 4 for transmitting the drive of a drive shaft (not shown) to the hub unit 25. In the illustrated instance, although a double row angular contact bearing employing balls for the rolling elements 7 and 7 has been shown, the present invention is not necessarily limited thereto and can be applied to a double row tapered roller bearing utilizing tapered rollers for the rolling elements.

The outer ring 26 of the wheel support bearing unit 28 is mounted inside the knuckle 29 and axially fixedly positioned by means of a stop ring 30. On the other hand, the pair of the inner rings 27 and 27 are press-fitted onto a radially inwardly stepped area 31 of a cylindrical configuration formed in the hub unit 25 and the constant velocity universal joint 4 is separably coupled with the hub unit 25 when while a large diameter side end face of the inner ring 27 on the inboard side is brought into abutment with a shoulder 14 of the outer coupling member 40 a free end of the stem portion 15 is fastened by an anchoring nut 18.

In this wheel support bearing assembly, the hub unit 25 is, after a medium carbon steel such as, for example, S53C, containing carbon in a quantity within the range of 0.40 wt% to 0.80 wt%, has been hot forged, cooled in a controlled manner, with the surface hardness consequently set to a value within the range of 23 HRC to 35 HRC. As described above, when the hub unit 25 is thermally refined, after the forging, with the surface hardness thereof set to a desired value, the strength of the corner area 21, which forms the most fragile portion susceptible to rotational bending fatigue, can be increased without altering the shape and dimension of the wheel mounting flange 10. However, the surface hardness of the hub unit 25 may be set to a value equal to or lower than 35 HRC without performing a thermal refinement on the hub unit 25 by hot-forging the material for the hub unit 25, that is, a medium carbon steel and then by forced-air-cooling or thermostatically maintaining it within a predetermined temperature range, thereby controlling the cooling rate. Even in this case, advantages similar to those afforded by the foregoing embodiment of the present invention can be obtained.

Also, an inboard root portion 32 of the wheel mounting flange 10 in the hub unit 25 is so designed that as is the case with the inboard root portion 22 shown and described in connection with the first embodiment of the present invention, the radius of curvature thereof is set to a value as large as possible and a region ranging from this root portion 32 to the radially inwardly stepped area 31 is hardened by an induction hardening technique to obtain a hardened layer 23 (shown by the cross hatched area in the drawing) having a surface hardness within the range of 54 HRC to 64 HRC. Thanks to this construction, a sufficient mechanical strength is provided against the rotational bending load on the wheel mounting flange 10 and the durability of the hub unit 25 can be increased consequently.

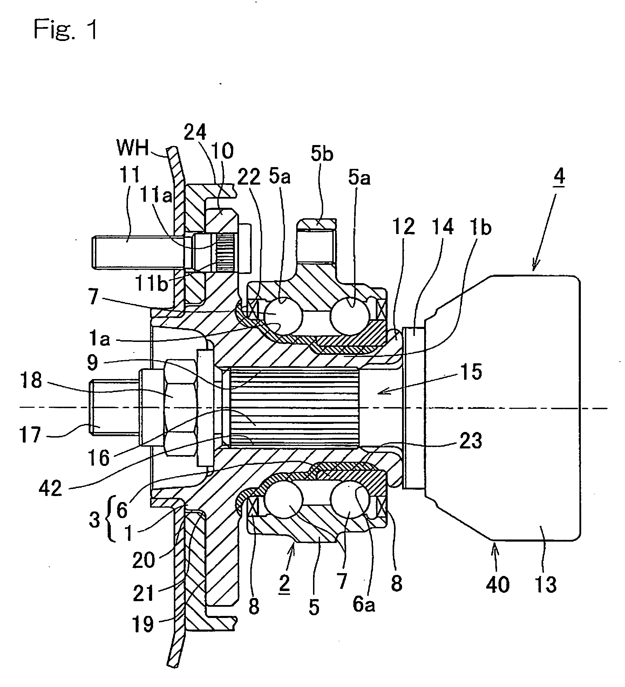

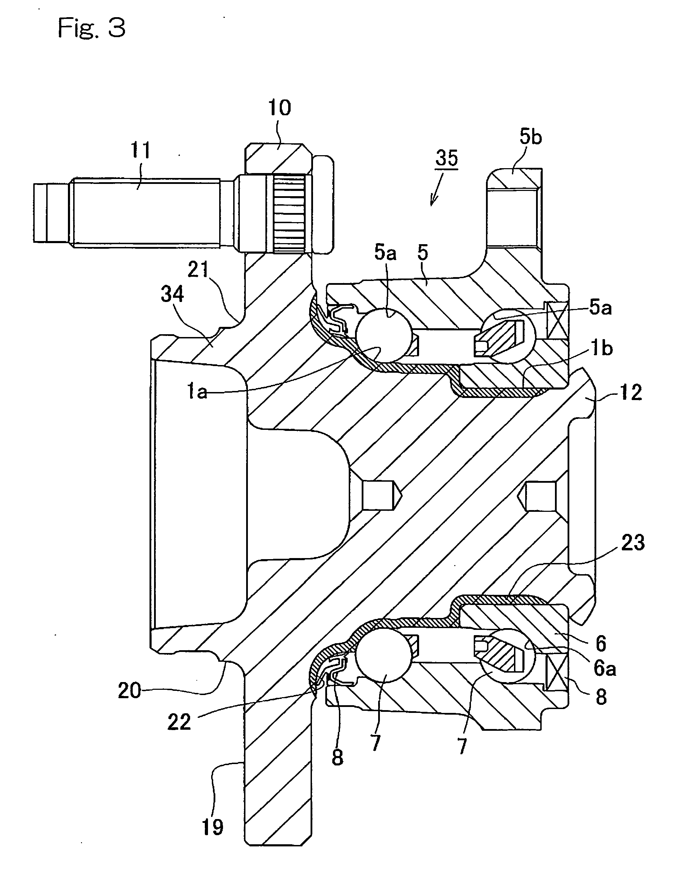

The pair of the inner rings 27 and 27 that are press-fitted onto the radially inwardly stepped area 31 are made of a high carbon and chromium bearing steel such as, for example, SUJ2 and are hardened deep down to the core by means of a dip quenching technique to have a hardness within the range of 58 HRC to 64 HRC. In view of the fact that the predetermined hardened layer 23 is formed in this radially inwardly stepped area 31, the fretting abrasion, which would occur between the radially inwardly stepped area 31 and the inner races 27 and 27, is suppressed effectively. As a consequence, the possibility of the inner rings 27 and 27 being damaged due to rusting, frictional wear and/or galling occurring at the surface of mounting of the inner rings 27 and 27 because of the fretting abrasion discussed above, can be eliminated with the durability being increased consequently. It is to be noted that surfaces of the serrations 9 formed on the inner peripheral surface of the hub unit 25 are formed with hardened layers 33 (shown by the cross hatched area in the drawing) of a surface hardness within the range of 54 HRC to 64 HRC achieved by means of an induction hardening. Accordingly, the frictional wear resistance of the serrations 9 can increase, and also the effective length of the serrations 9 can be reduced as a result of the increased strength, thus contributing to reduction in size and weight of the hub axle 25. On the other hand, the outer ring 26 is, as is the case with the inner ring 27, made of a high carbon chromium bearing steel such as, for example, SUJ2 and is hardened deep down to the core by means of the dip quenching technique to have a hardness within the range of 54 HRC to 64 HRC. According to the wheel support bearing assembly shown in and described with reference to Fig. 3, effects similar to those afforded by the wheel support bearing assembly shown in and described with reference to Fig. 1 can be obtained.

Fig. 3 illustrates a sectional view of the wheel support bearing assembly according to a third preferred embodiment of the present invention. This third embodiment is applied to the wheel support bearing assembly of the so-called third generation type, and component parts, portions or functions employed therein, but similar to those shown and described in connection with the previously described first and second embodiments are designated by like reference numerals and, therefore, the details thereof will not be reiterated for the sake of brevity.

This wheel support bearing assembly is for supporting a vehicle driven wheel and includes the hub unit 34 and a double row rolling bearing unit 35 unitized together with thee hub unit 34. The double row rolling bearing unit 35 includes an outer member 5, a hub unit 34, a separate inner ring 6 press-fitted onto the radially inwardly stepped area 1b defmed in the hub axle 34, and double row rolling elements 7 and 7.

In this wheel support bearing assembly, after the inner ring 6 has been press fitted onto the radially inwardly stepped area 1b defined in the hub unit 34, one end of the radially inwardly stepped area 1b is plastically deformed so as to extend radially outwardly to thereby define the crimped portion 12, by which the inner ring 6 is axially fixed relative to the hub unit 34, thereby completing the unitization of the double row rolling bearing unit 35. By this unitization, it is possible to provide a third generation type wheel support bearing assembly of a so-called self-retained structure, in which a preload control of the double row rolling bearing unit 35 can be achieved with no fastening means such as, for example, an anchoring nut being used.

In this wheel support bearing assembly, the hub unit 34 has a surface hardness set to be within the range of 23 HRC to 35 HRC by performing thereon a controlled cooling process after the medium carbon steel containing carbon within the range of 0.40 wt% to 0.80 wt%, such as, for example, S53C or the like, has been hot forged. By performing the controlled cooling process after the hub unit 34 has been forged in this manner to have the desired surface hardness, the strength of the corner area 21, which is the most fragile area susceptible to the rotational bending fatigue, can be increased with no need to alter the shape and the dimension of the wheel mounting flange 10.

Also, an inboard root portion of the wheel mounting flange 10 in the hub unit 32 defines the seal land area 22 for the inboard sealing element 8, which area 22 has a radius of curvature so as to be as large as possible. A region ranging from this seal land area 22 to the radially inwardly stepped area 1b is hardened by an induction hardening technique to obtain a hardened layer 23 (shown by the cross hatched area in the drawing) having a surface hardness within the range of 54 HRC to 64 HRC. Accordingly, the seal land area 22 can have an increased frictional wear resistance, and also a sufficient mechanical strength is exhibited against the rotational bending load acting on the wheel mounting flange 10 and the durability of the hub unit 34 can be increased consequently.

According to the wheel support bearing assembly of the construction hereinbefore described, since after the material for the hub unit 34 has been hot forged, the controlled cooling process is performed to render the hub unit 34 to have a surface hardness within the range of 23 HRC to 35 HRC, the strength of the corner area 21, which is the most fragile area susceptible to the rotational bending fatigue, can be increased with no need to alter the shape and the dimension of the wheel mounting flange 10. Other structural features are similar to those afforded by the embodiment shown in and described with particular reference to Fig. 1.

In describing the third embodiment described hereinbefore, reference has been made to the hub unit 34 formed integrally with the wheel mounting flange 10, but the present invention may not necessarily be limited thereto and may be applied to a wheel support bearing assembly of an outer rotating type, in which the outer member is formed integrally with the wheel mounting flange. In this case, the thermal refinement will be performed on the outer member.

## Claims

1. A method for manufacturing a wheel support bearing assembly, which comprises
an outer member (5) having an inner periphery formed with double row rolling surfaces (5a);
an inner member (3) formed with double row rolling surfaces (1a, 6a) opposed to the respective rows of rolling surfaces (5a) on the outer member (5);
double row rolling elements (7) rollingly accommodated between the respective rolling surfaces (5a; 1a, 6a) of the outer and inner members (5, 3); and
a wheel mounting flange (10) being formed integrally with one of the outer and inner members (5, 3),
**characterized in that**
at least one of the outer and inner members (5, 3), which is formed with the wheel mounting flange (10), is forged and rendered to have a troostite structure, a sorbite structure or a mixed structure of troostite and sorbite by controlling a cooling rate in the forging process , such that the rolling surfaces (5a; 1a, 6a) on the outer and inner members (5, 3) are hardened to predetermined surface hardness.

2. The method as claimed in Claim 1, wherein the inner member (3) includes the hub unit (1,25,34) formed with the wheel mounting flange (10) and an inner ring (6) press-fitted onto the hub unit (1, 25, 34); the inner rolling surface (1a) opposed to one of the outer rolling surfaces (5a) formed in the outer member (5) is formed directly in an outer peripheral surface of the hub unit (1, 25, 34); and the inner rolling surface (6a) opposed to the other of the outer rolling surfaces (5a) is formed in an outer peripheral surface of the inner ring (6).

3. The method as claimed in Claim 1, wherein an outboard root portion of the wheel mounting flange (10) has a surface hardness set to a value within the range of 23 HRC to 35 HRC.

4. The method as claimed in Claim 2, wherein an inboard end of the hub unit (1, 34) is plastically deformed in a direction radially outwardly thereof to form a crimped portion (12) and the inner ring (6) is axially fixed by this crimped portion (12) relative to the hub unit (1, 34).

5. The method as claimed in Claim 4, wherein the crimped portion (12) is tempered to have a surface hardness within the range of 18 HRC to 25 HRC.

6. The method as claimed in Claim 2, wherein outboard and inboard sealing elements (8) are disposed at opposed ends of the outer member (5), respectively, and a seal land area (22), with which a sealing lip of the outboard sealing element (8) is slidingly engaged, is formed in an inboard root portion (32) of the wheel mounting flange (10), the seal land area (22) having a surface hardness set to a value within the range of 54 HRC to 64 HRC.

7. The method as claimed in Claim 1, wherein the inner member (3) or the outer member (5) subject to the cooling rate controlling in forging or to the isothermal transformation is made of a medium carbon steel containing carbon in a quantity within the range of 0.40 wt% to 0.80 wt%.

8. The method as claimed in Claim 1, comprising the steps of:
forging the outer member (5) or the inner member (3);
cooling it at a cooling rate within the range of 100°C to 300°C per minute at a temperature within the range of 400°C to 700°C; and
utilizing a controlled cooling to further air cool so as to form a troostite structure, a sorbite structure or a mixed structure of troostite and sorbite, thereby to
obtaining a predetermined structure and a predetermined hardness.

## Patentansprüche

1. Verfahren zur Herstellung einer Radstützlageranordnung, die folgendes umfasst:
ein äußeres Element (5), das einen inneren Umfang aufweist, der mit zweireihigen Wälzflächen (5a) ausgebildet ist,
ein inneres Element (3), das mit zweireihigen Wälzflächen (1a, 6a) ausgebildet ist, die den entsprechenden Reihen von Wälzflächen (5a) an dem äußeren Element (5) gegenüberliegen,
zweireihige Wälzelemente (7), die wälzbar zwischen den jeweiligen Wälzflächen (5a; 1a, 6a) des äußeren und inneren Elements (5, 3) aufgenommen sind, und
einen Radbefestigungsflansch, der integral mit dem äußeren oder dem inneren Element (5, 3) ausgebildet ist,
**dadurch gekennzeichnet,**
**dass** wenigsten eines des äußeren und des inneren Elements (5, 3), das mit dem Radbefestigungsflansch (10) ausgebildet ist, geschmiedet und derart ausgeführt ist, durch Steuern einer Kühlrate im Schmiedeprozess eine Troostitstruktur, eine Sorbitstruktur oder eine Mischstruktur aus Troostit und Sorbit aufzuweisen, so dass die Wälzflächen (5a; 1a, 6a) an dem äußeren und inneren Element (5, 3) zu einer vorbestimmten Oberflächenhärte gehärtet werden.

2. Verfahren nach Anspruch 1, wobei das innere Element (3) die Nabeneinheit (1, 25, 34) enthält, die mit dem Radbefestigungsflansch (10) und einem inneren Ring (6), welcher auf die Nabeneinheit (1, 25, 34) aufgepresst ist, ausgebildet ist; die innere Wälzfläche (1a), welche einer der äußeren Wälzflächen (5a), die in dem äußeren Element (5) gebildet ist, gegenüberliegt, direkt in einer äußeren Umfangsfläche der Nabeneinheit (1, 25, 34) gebildet ist; und die innere Wälzfläche (6a), welche den anderen äußeren Wälzflächen (5a) gegenüberliegt, in einer äußeren Umfangsfläche des inneren Rings (6) gebildet ist.

3. Verfahren nach Anspruch 1, wobei ein äußerer Hauptabschnitt des Radbefestigungsflansches (10) eine Oberflächenhärte aufweist, die auf einen Wert innerhalb des Bereichs von 23 HRC bis 35 HRC gesetzt ist.

4. Verfahren nach Anspruch 2, wobei ein inneres Ende der Nabeneinheit (1, 34) in einer radial nach außen laufenden Richtung plastisch deformiert ist, um einen gebördelten Abschnitt (12) zu bilden, und der innere Ring (6) durch diesen gebördelten Abschnitt (12) im Verhältnis zur Nabeneinheit (1, 34) axial fixiert ist.

5. Verfahren nach Anspruch 4, wobei der gebördelte Abschnitt (12) getempert ist, um eine Oberflächenhärte innerhalb des Bereichs von 18 HRC bis 25 HRC aufzuweisen.

6. Verfahren nach Anspruch 2, wobei äußere und innere Dichtungselemente (8) jeweils an gegenüberliegenden Enden des äußeren Elements (5) angeordnet sind und eine Dichtungsanquetschfläche (22), mit welcher eine Dichtlippe des äußeren Dichtelements (8) gleitend in Eingriff steht, in einem inneren Hauptabschnitt (32) des Radbefestigungsflansches (10) gebildet ist, wobei die Dichtungsanquetschfläche (22) eine Oberflächenhärte aufweist, die auf einen Wert innerhalb des Bereichs von 54 HRC bis 64 HRC gesetzt ist.

7. Verfahren nach Anspruch 1, wobei das innere Element (3) oder das äußere Element (5), welches der beim Schmieden gesteuerten Kühlrate oder der isothermischen Umformung unterzogen ist, aus einem kohlenstoffmittelreichen Stahl hergestellt ist, der Kohlenstoff in einer Menge innerhalb des Bereichs von 0,40 Gew.% bis 0,80 Gew.% enthält.

8. Verfahren nach Anspruch 1, umfassend die folgenden Schritte:
Schmieden des äußeren Elements (5) oder des inneren Elements (3);
Kühlen desselben bei einer Kühlrate innerhalb des Bereichs von 100 °C bis 300 °C pro Minute bei einer Temperatur innerhalb des Bereichs von 400 °C bis 700 °C; und
Verwenden einer gesteuerten Kühlung, um ferner luftzukühlen, um so ein Troostitstruktur, eine Sorbitstruktur oder eine Mischstruktur aus Troostit und Sorbit zu bilden, wodurch eine vorgegebene Struktur und eine vorgegebene Härte erhalten wird.

## Revendications

1. Procédé de fabrication d'un ensemble de palier support de roue, comprenant :
un organe extérieur (5) ayant une périphérie intérieure munie d'une double rangée de surfaces de roulement (5a),
un organe intérieur (3), muni d'une double rangée de surfaces de roulement (1a, 6a) opposées aux rangées respectives de surfaces de roulement (5a) situées sur l'organe extérieur (5) ;
une double rangée d'élément à roulement (7), logés à roulement entre les surfaces de roulement (5a ; 1a, 6a) respectives des organes extérieurs et intérieurs (5, 3) ; et
une bride de montage de roue (10), formée d'une seule pièce avec l'un des organes extérieurs et intérieurs (5, 3),
**caractérisé en ce qu'**
au moins l'un des organes extérieurs et intérieurs (5, 3), muni de la bride de montage de roue (10), est forgé et travaillé pour présenter une structure en troostite, une structure en sorbite ou une structure mixte en troostite et en sorbite, par le biais d'une commande de la vitesse de refroidissement lors du processus de forgeage, de manière que les surfaces de roulement (5a ; 1a, 6a) situées sur les organes extérieurs et intérieurs (5, 3) soient durcies à une dureté de surface prédéterminée.

2. Procédé selon la revendication 1, dans lequel l'organe intérieur (3) comprend l'unité formant moyeu (1, 25, 34), munie de la bride de montage de roue (10) et un anneau intérieur (6), monté avec ajustement serré sur l'unité formant moyeu (1, 25, 34) ; la surface de roulement intérieure (1a), opposée à l'une des surfaces de roulement extérieures (5a) formées dans l'organe extérieur (5), est formée directement dans une surface périphérique extérieure de l'unité formant moyeu (1, 25, 34) ; et la surface de roulement intérieure (6a), opposée à l'autre des surfaces de roulement extérieures (5a), est formée dans une surface périphérique extérieure de l'anneau intérieur (6).

3. Procédé selon la revendication 1, dans lequel une partie racine extérieure de la bride de montage de roue (10) présente une dureté de surface fixée à une valeur dans la fourchette de 23 HRC à 35 HRC.

4. Procédé selon la revendication 2, dans lequel une extrémité intérieure de l'unité formant moyeu (1, 34) est soumise à une déformation plastique dans une direction orientée radialement vers l'extérieur de celle-ci, pour former une partie sertie (12) et l'anneau intérieur (6) est fixé axialement par cette partie sertie (12) par rapport à l'unité formant moyeu (1, 34).

5. Procédé selon la revendication 4, dans lequel la partie sertie (12) est soumise à un revenu thermique, pour avoir une dureté de surface dans la fourchette de 18 HRC à 25 HRC.

6. Procédé selon la revendication 2, dans lequel des éléments d'étanchéité intérieurs et extérieurs (8) sont disposés à des extrémités opposées de l'organe extérieur (5), respectivement, et une zone d'ilot d'étanchéité (22), avec laquelle une lèvre d'étanchéité de l'élément d'étanchéité extérieur (8) est en contact glissant, est formée dans une partie racine intérieure (32) de la bride de montage de roue (10), la zone d'ilot d'étanchéité (22) ayant une dureté de surface fixée à une valeur comprise dans la fourchette de 54 HRC à 64 HRC.

7. Procédé selon la revendication 1, dans lequel l'organe intérieur (3) ou l'organe extérieur (5), soumis à la commande de vitesse de refroidissement lors du forgeage ou à la transformation isothermique, est formé d'un acier à teneur moyenne en carbone, en une quantité dans la fourchette comprise entre 0,40 % en poids à 0,80 % en poids.

8. Procédé selon la revendication 1, comprenant les étapes consistant à :
forger l'organe extérieur (5) ou l'organe intérieur (3) ;
le refroidir, à une vitesse de refroidissement dans la fourchette de 100°C à 300°C par minute, à une température située dans la fourchette de 400°C à 700°C ; et
utiliser un refroidissement contrôlé, pour effectuer un refroidissement à l'air supplémentaire, de manière à former une structure en troostite, une structure en sorbite ou une structure mixte en troostite et en sorbite, de manière à obtenir une structure prédéterminée et une dureté prédéterminée.
